Europäisches Patentamt

(19) European Patent Office

Office européen des brevets

(11) Publication number : **0 458 415 B1**

# (12) EUROPEAN PATENT SPECIFICATION

(45) Date of publication of patent specification :
**22.09.93 Bulletin 93/38**

(51) Int. Cl.[5] : **C10M 143/12,** C10L 1/16,
**C08F 8/04,** C08F 287/00

(21) Application number : **91201202.8**

(22) Date of filing : **17.05.91**

(54) Oil compositions containing functionalised polymers.

(30) Priority : **24.05.90 US 527803**

(43) Date of publication of application :
**27.11.91 Bulletin 91/48**

(45) Publication of the grant of the patent :
**22.09.93 Bulletin 93/38**

(84) Designated Contracting States :
**BE DE ES FR GB IT NL**

(56) References cited :
**EP-A- 0 215 501**
**US-A- 4 141 847**
**US-A- 4 788 361**

(73) Proprietor : **SHELL INTERNATIONALE
RESEARCH MAATSCHAPPIJ B.V.**
**Carel van Bylandtlaan 30**
**NL-2596 HR Den Haag (NL)**

(72) Inventor : **Sutherland, Robert Jude**
**16211 Cairngorm Avenue**
**Houston, Texas 77095 (US)**

EP 0 458 415 B1

Jouve, 18, rue Saint-Denis, 75001 PARIS

## Description

This invention relates to oil compositions containing functionalised polymers, and more particularly to oil compositions containing functionalised polymers as viscosity index (VI) improvers.

It is well known that the viscosity of lubricating oils varies with temperature, and since lubricating oils are generally exposed to a relatively broad temperature range during use, it is important that the oil not be too viscous (thick) at low temperature nor too fluid (thin) at high temperatures. In this regard, variation in the viscosity-temperature relationship of an oil is indicated by the so-called viscosity index (VI). The higher the viscosity index, the less the change in viscosity with temperature. In general, the viscosity index is a function of the oil viscosity at a given lower temperature and a given higher temperature. In the United States of America, the given lower temperature and the given higher temperature for automotive lubricating oils are fixed by the test procedure ASTM D 2270. Currently the lower temperature specified in this test procedure is 40°C and the higher temperature is 100°C.

Various methods have been proposed for improving the rheological properties of lubricating oil compositions. Frequently these methods involve the use of one or more polymeric additives. Methods wherein the polymeric additive is a linear or branched chain polymer, are disclosed, for example, in U.S. Patents Nos. 3,554,911; 3,668,125; 3,772,196; 3,775,329 and 3,835,053. The polymeric additives disclosed in these U.S. Patents are, generally, hydrogenated, linear or substantially linear polymers of one or more conjugated dienes which may, optionally, also contain monomeric units of one or more monoalkenyl aromatic hydrocarbons. Polymers of the type disclosed in this series of patents are typically prepared via the anionic solution polymerization of the monomers followed by hydrogenation. A selectively hydrogenated, linear block copolymer comprising a single styrene polymer block and a single selectively hydrogenated isoprene polymer block, which block copolymer is according to U.S. Patent No. 3,772,196, is available commercially and is commonly used as a VI improver.

Methods wherein the polymeric additive is a star-shaped (radial) polymer are taught, for example, in U.S. Patents Nos. 4,077,893; 4,116,917; 4,141,847; 4,156,673; and 4,427,834. The polymeric additives disclosed in these patents are, generally, star-shaped (radial) polymers wherein all, or at least most, of the polymer arms are either homopolymers of copolymers of conjugated dienes or copolymers of one or more conjugated dienes and one or more monoalkenyl aromatic hydrocarbons. In certain of these polymeric additives, however, one or more arms are either modified or different. Polymers wherein all of the arms are either hydrogenated homopolymers or copolymers of one or more conjugated dienes, selectively hydrogenated copolymers of one or more conjugated diolefins and one or more monoalkenyl aromatic hydrocarbons are described in U.S. Patents Nos. 4,116,917 and 4,156,673. Star polymers of the type disclosed in U.S. Patents Nos. 4,116,917 and 4,156,673 which are modified to incorporate functional groups imparting dispersant characteristics are disclosed in U.S. Patents Nos. 4,077,893 and 4,141,847. The polymeric additives disclosed in U.S. Patent No. 4,077,893 are hydrogenated star-shaped polymers which are reacted first with an unsaturated carboxylic acid or derivative thereof and then with an alkane polyol. The polymeric additives disclosed in U.S. Patent No. 4,141,847 are hydrogenated star-shaped polymers which are reacted first with an unsaturated carboxylic acid or derivative thereof and then with an amine. Polymeric additives disclosed in U.S. Patent No. 4,427,834 are ones wherein one or more of the arms of a star-shaped polymer such as one of those disclosed in U.S. Patents Nos. 4,116,917 and 4,156,673 is, effectively, replaced with an arm prepared by polymerizing a nitrogen-containing monomer. Star-shaped polymers wherein all of the arms are homopolymers of isoprene, which star-shaped polymers are in accordance with U.S. Patents Nos. 4,116,917 and 4,156,673 are commercially available and commonly used as VI improvers.

Even more recently it has been discovered that an unfunctionalized triblock copolymer comprising terminal polymer blocks of hydrogenated isoprene and a monoalkenyl aromatic hydrocarbon central polymer block is an effective VI improver. Thus, for example, U.S. Patent No. 4,788,361 teaches that the triblock copolymer provides a good balance between thickening efficiency, mechanical shear stability and high temperature, high shear rate (HTHSR) viscosity responses.

As is well known in the prior art, thickening efficiency of a polymeric additive has, heretofore, generally been the principle, and sometimes the sole consideration in its selection for use as a VI improver. Particularly, polymeric additives which significantly increase the high temperature kinematic viscosity without significantly increasing the low temperature kinematic viscosity have been sought. Emphasis was, then, given to obtaining a good VI improver based upon temperatures specified in ASTM D 2270, and little consideration has been given to the kinematic viscosity at even higher temperatures, such as 150°C. Now, however, with the current emphasis on smaller, more compact, engines in which lubricating oils are exposed to even higher operating temperatures, it is becoming important to consider viscosities at these higher temperatures in selecting VI improvers. Consideration needs to be given to both high-temperature, high-shear rate viscosities and cold temperature properties of lubricating oils.

Recently, it has been discovered that certain hydrogenated, asymmetric radial polymers yield particularly effective VI improvers and offer improved high temperature kinematic viscosities. These polymers. however, reduce the high-temperature, high-shear rate viscosities and have little, if any, effect on the low temperature properties of the oil. U.S. Patent 4,849,481 discloses hydrogenated, asymmetric radial polymers comprising a plurality of arms, some of which are polymers of one or more hydrogenated conjugated diolefins and others of which are block copolymers comprising a polymeric block containing predominantly one or more monoalkenyl aromatic hydrocarbon monomer units and a polymeric block containing predominantly one or more hydrogenated conjugated diolefin monomer units. These asymmetric radial polymers are prepared by first coupling a suitable blend of living polymers in the same manner used, generally, to prepare star-shaped polymers and then selectively hydrogenating the conjugated diolefin portions of the radial polymers. As indicated in US Patent No. 4,849,481, these polymers do offer enhanced kinematic viscosities at higher temperatures, such as 150°C, and it is expected that their use in engine oil compositions for the smaller engines would offer significantly improved performance. The need remains, however, for further improvement in high temperature kinematic viscosities and it is always desirable to achieve more readily accessible methods for obtaining suitable results. A need remains for oil compositions having an improved high-temperature, high-shear rate and improved cold temperature properties.

U.S. Patent No. 4,898,914 and EP-A-215 501 disclose functionalised selectively hydrogenated block copolymers of the formula $B_n(AB)_o A_p$, where n is 0 or an integer of at least 1, 0 is an integer of at least 1, A is predominantly a polymerised monoalkenyl-aromatic hydrocarbon block and B prior to hydrogenation is predominantly a polymerised conjugated diene hydrocarbon block, to which copolymer has been grafted at least one electrophilic graftable molecule or electrophile wherein substantially all of the graftable molecules are grafted to the block copolymer in the monoalkenyl-arene block. Structural formulae specifically listed include A-B, A-B-A, A-B-A-B, B-A, B-A-B, B-A-B-A ad $(AB)_{o, 1, 2} ...BA$. Specifically listed conjugated dienes comprise 1,3-butadiene, 2-methyl-1,3-butadiene (isoprene), 2,3-dimethyl-1,3-butadiene, 1,3-pentadiene and 1,3-hexadiene, of which 1,3-butadiene is listed as preferred. Preferred monoalkenyl-aromatic hydrocarbons are vinyl-aromatic hydrocarbons of which styrene, o-methylstyrene, p-methylstyrene, p-tert.butylstyrene, 1,3-dimethylstyrene, alphamethylstyrene, vinyl naphthalene and vinylanthracene are listed, styrene being preferred. Preferred electrophiles include carbon dioxide, ethylene oxide, aldehydes, ketones, carboxylic acids and salts and esters thereof, arylhalides, epoxides, sulphur, boxoz alkoxides, isocyanates, sulphonates and various silicon compounds. In Examples 1 to 14, the electrophile is carbon dioxide.

The modified block copolymers of US Patent No. 4,898,914 and EP-A-215,501 are stated to be suitable for any purpose for which the unmodified base polymer was formerly used, e.g. as adhesives and sealants or compounded and extruded or moulded in any convenient manner, and they are stated to be thermally stable, to have a low residual unsaturation, to be excellent in appearance characteristics, melt-flow characteristics and mechanical properties such as tensile strength and impact resistance.

It is nowhere suggested in US Patent No. 4,898,914 or EP-A-215,501 that any polymer described therein might be suitable for incorporation in any oil composition.

Surprisingly it has now been discovered that certain of the polymers within the ambit of the disclosures of U.S. Patent No. 4,898,914 and EP-A-215,501 have utility as viscosity index (VI) improvers in oil compositions.

In accordance with the present invention there is provided an oil composition comprising a major amount of an oil and a minor amount of a selectively hydrogenated carboxyl functionalised polymer of general formula B-A-B, wherein each B, prior to hydrogenation, is a conjugated diolefin polymer block and A is a monoalkenyl aromatic hydrocarbon polymer block, said polymer being carboxyl functionalised in the aromatic hydrocarbon polymer block thereof.

The functionalised polymer may be regarded as a linear, selectively hydrogenated triblock copolymer modified by incorporating carboxyl functionality therein, the selectively hydrogenated modified triblock copolymer comprising a single, central polymer block containing at least 85% w monoalkenyl aromatic hydrocarbon monomer units and two terminal polymeric blocks containing at least 85% w hydrogenated conjugated diolefin monomer units. The block copolymer is selectively hydrogenated such that at least 80% of the ethylenic unsaturation initially contained in the polymer is converted or saturated and the block copolymer is functionalized by incorporating carboxyl functionality into the polymeric block containing at least 85% w monoalkenyl aromatic hydrocarbon monomer units.

The block copolymers useful in the present invention are a modification of certain of those described in US Patent No. 4,898,914 and EP-A-215,501, particularly in Examples 1 to 14 thereof. Example 1 thereof discloses an experiment in which 45.36 kg of a polymer cement containing a styrene-ethylene/butylene-styrene type block copolymer having a molecular weight of about 50,000 and a polystyrene content of 30% w in cyclohexane (5% solids) was lithiated at 60°C using a diamine (tetramethylethylenediamine, TMEDA) promoted sec-

3

butylLi reagent (1.1 mol base, 1.8 mol promoter). A rapid metallation reaction afforded a thixotropic, semisolid cement which immobilized the reactor's stirring mechanism (auger type) within 3-4 minutes. An aliquot of the lithiated-polymer cement was quenched with $D_2O$. The remainder was transferred through a 3.8 cm diameter line to a vessel containing an excess of $CO_2$ (1.36 kg) in tetrahydrofuran (THF). The carboxylated product was treated with acetic acid (85 g, 1.4 mol) and finished by steam coagulation affording over 1.81 kg of white, functionalized polymer crumb. Analyses of the carboxylated product found 0.84 %wt $-CO_2H$ and 0.29 %wt $-CO_2$- for a total polymer bound carboxylate content of 1.13 %wt.

A deuterium (D) NMR analysis of the $D_2O$ treated aliquot found the D resided primarily at aromatic sites, at meta and para positions on the ring, (90 % of total D) with the remainder of the tag or label being at either benzylic or allylic positions (10% of total D). The technique cannot discern between allylic and benzylic locations. Thus, the label resided principally, at least 90%, and most likely entirely, in the polystyrene block of the polymer. It was inferred from this labelling experiment that essentially all of the lithiation reaction (at least 90%) occurred in the polystyrene block and that therefore essentially all of the carboxylation must occur at these sites.

The weight average molecular weight of the monoalkenyl aromatic hydrocarbon polymer block A is preferably in the range from 5,000 to 100,000 while the weight average molecular weight of each of the conjugated diolefin polymer blocks B is preferably in the range from 20,000 to 150,000. According to the disclosures of US Patent No. 4,898,914 and EP-A-215,501, the carboxyl functionality in the polymers useful in the present invention may be incorporated by reacting $CO_2$ with polymers metalated in the monoalkenyl aromatic hydrocarbon polymer blocks. The polymers useful in the present invention will generally have 1,2-microstructures prior to hydrogenation within the range from 7 to 100 %.

In general, any of the methods well known in the prior art may be used to produce the triblock copolymers which may be subsequently selectively hydrogenated, then carboxyl functionalized and then used as VI improvers in the present invention. Suitable such methods include, for example, those described in U.S. Patents Nos. 3,231,635; 3,265,765 and 3,322,856. The block copolymers which may be selectively hydrogenated, modified and rendered useful as VI improvers in accordance with the present invention may generally be represented by the general formula:

B - A - B

wherein B is a polymeric block containing, initially, at least 85%w conjugated diolefin monomer units and A is a polymeric block comprising at least 85%w one or more monoalkenyl aromatic hydrocarbon monomer units. In general, polymers of this type can be prepared by first combining a conjugated diolefin or a monomer mixture comprising predominantly conjugated diolefins in a suitable solvent and then polymerizing the conjugated diolefin or the monomer mixture comprising predominantly conjugated diolefins in the presence of an organo metallic compound, particularly an organo metallic compound containing an alkali metal atom, until the polymerization is substantially complete, to produce the first conjugated diolefin polymer block. Particularly preferred organometallic compounds for use in preparing the block copolymers useful in the present invention with this sequential polymerization technique are hydrocarbon radicals bonded to a single lithium atom. Suitable hydrocarbon compounds containing a single lithium atom include unsaturated compounds such as allyllithium and methallylithium; aromatic compounds such as phenyllithium, the tolyllithiums, the xyllithiums, the napthyllithiums and the like; and alkyllithiums such as methyllithium, ethyllithium, propyllithium, butyllithium, amyllithium, hexyllithium, 2-ethylhexyl- lithium, and n-hexadecyllithium. Secondary-butyl- lithium is the most preferred initiator.

Suitable solvents useful in the preparation of the block copolymers include hydrocarbons such as paraffins, cycloparaffins, aromatics and alkyl-substituted cycloparaffins and aromatics, containing from about 4 to about 10 carbon atoms per molecule, for example, benzene, toluene, cyclohexane, methylcyclohexane, n-butane, n-hexane and n-heptane.

Suitable conjugated diolefins include $C_{4-8}$ conjugated diolefins, including 1,3-butadiene, 2-methyl-1,3-butadiene (isoprene), 2,3-dimethyl-1,3-butadiene, 1,3 pentadiene and 1,3-hexadiene. Mixtures of such conjugated diolefins may also be used. Isoprene is the most preferred conjugated diolefin.

Once polymerization of the first conjugated diolefin polymer block has been completed, the monoalkenyl aromatic hydrocarbon polymeric block may be formed by adding one or more monoalkenyl aromatic hydrocarbon monomers to the solution containing the living conjugated diolefin polymer block and continuing the polymerization until polymerization of the monoalkenyl aromatic hydrocarbon monomer or monomers is substantially complete. Suitable monoalkenyl aromatic hydrocarbon monomers include aryl-substitute olefins such as styrene, various alkyl-substituted styrenes, such as o-methylstyrene, p-methylstyrene, p-tert.butyl styrene,

EP 0 458 415 B1

1,3-dimethylstyrene and alpha-methyl styrene, alkoxy-substituted styrenes, vinyl naphthalene, and alkyl-substituted vinyl naphthalenes. Styrene is the most preferred monoalkenyl aromatic hydrocarbon monomer. In general, the amount of monoalkenyl aromatic hydrocarbon monomer added will be controlled such that the desired molecular weight of the monoalkenyl aromatic hydrocarbon polymer block is obtained.

Once the preparation of the monoalkenyl aromatic hydrocarbon monomer polymeric block has been completed, the second conjugated diolefin polymeric block can be prepared by adding additional conjugated diolefin or a monomer mixture comprising predominantly conjugated diolefins to the solution containing the living diblock copolymer prepared in the previous steps. Polymerization of the added monomer is then continued until polymerization of the added monomer is at least substantially complete.

The B-A-B triblock copolymers which may be subsequently hydrogenated and used as VI improvers may also be prepared by first polymerizing the monoalkenyl aromatic hydrocarbon block with an anionic initiator comprising two lithium atoms and thereafter growing the terminal polyisoprene blocks. The B-A-B triblock copolymers may further be prepared by polymerizing a first isoprene block and then a monoalkenyl aromatic hydrocarbon polymer block having a molecular weight equal to half that sought in the final polymer and then coupling the resulting diblock copolymer using techniques well known in the prior art.

In general, preparation of the block copolymers, which will be subsequently selectively hydrogenated, may be completed at a temperature within the range from -150°C to 300°C. In general, the polymerization will be carried out in an inert atmosphere, preferably nitrogen, and may be carried out under pressure, for example, at a pressure within the range from 0.5 to 10 bar (50,000 to 1,000,000 Pa). The concentration of initiator used in the polymerization reaction may vary over a relatively wide range but will be controlled in combination with the amount of monomer used so as to produce triblock copolymers having the desired molecular weights.

As indicated in the copending applications, the polymers which may be functionalized and used in the present invention may be functionalized by first metalizing a previously prepared polymer by reacting the same with a suitable metalization agent such as $R(li)_x$. Generally, the metalization will be accomplished in the presence of a suitable polar metalization promoter such as a tertiary amine, a bridgehead monoamine, an ether or a metal alkoxide. After the polymer is metalated, the same will then be reacted with $CO_2$ to incorporate an acid salt of the metal contained in the metalization compound and then neutralized to form the carboxylic acid (-COOH) radical. Polymers useful in the present invention may, for example, functionalized to the extent of from 0.1 to 40 preferably 1 to 30, most preferably 5 to 20, mol percent carboxyl functionality based on total aromatic monomer in the polymer.

In general, the selectively hydrogenated and functionalized block copolymer useful in this invention may be used in a broad range of hydrocarbons to improve the VI thereof. The selectively hydrogenated, functionalised polymer of the present invention is particularly useful when added to a variety of oils including crude, lubricating and fuel oils to produce oil compositions having improved viscosity index characteristics. Preferably the oil is a lubricating oil. The selectively hydrogenated functionalized polymer of this invention may be added to oils such as middle distillate fuels, synthetic and natural lubricating oils, crude oils and industrial oils. The oils may be paraffinic, napthenic or aromatic. The polymer of use in this invention is particularly useful when used in hydrocarbon liquids, particularly oils, with non-saturated (aromatic) and non-polar groups as determined by clay gel analysis within the range from 0 to 35 %w. Such oils include a range of base oil stocks from synthetic oils such as polyalpha-olefin oils to natural NVI oils. In general, the polymer useful in this invention may be effective to improve viscosity index characteristics at concentrations within the range from 0.01 to 15 %w although concentrations within the range from 0.05 to 2.5 %w are most effective and concentrations within the range from 0.1 to 2 %w are particularly preferred. The higher concentrations might typically be those of a lubricant concentrate, which would normally be diluted with additional hydrocarbon oil prior to actual use.

In general, oils containing the VI improver of this invention may contain other additives such as dispersants, detergents, anti-oxidants, extreme pressure additives and pour point depressants. These additives are not, however, necessary to obtaining the improved viscosity index characteristics offered by the viscosity index improver of this invention.

In a preferred embodiment of the present invention, a triblock copolymer comprising a single central polymeric block containing predominantly monoalkenyl aromatic hydrocarbon monomer units and two terminal polymeric blocks containing predominantly conjugated diolefin monomer units will be selectively hydrogenated and functionalized so as to contain carboxylic acid (-COOH) functionality in the monoalkenyl aromatic hydrocarbon polymer block and used as a VI improver. The weight average molecular weight (Mw) of the monoalkenyl aromatic hydrocarbon polymer block in the triblock copolymer will preferably range from 5,000 to 100,000, preferably 20,000 to 70,000, and the weight average molecular weight of the conjugated diolefin polymer blocks will preferably range from 20,000 to 150,000, preferably 45,000 to 90,000. The molecular weight of each block will be controlled such that the weight ratio of total monoalkenyl aromatic hydrocarbon monomer units to total conjugated diolefin monomer units in the triblock copolymer based on the weight average molecular weights

5

of the respective polymer blocks is preferably in the range from 0.05:1 to 1:1, preferably 0.1:1 to 0.6:1. In the preferred embodiment, wherein the oil is a lubricating oil, the viscosity index improver will be used in a fully formulated SAE 10W40 multigrade, overbased engine oil formulation. A SAE 10W40 overbased oil formulation will preferably contain from 8 to 10 %w of a standard SG/CD additive package and from 0.1 to 2.0 %w of the modified block copolymer. The modified triblock copolymer will typically contain from 0.1 to 40, preferably 1 to 30, most preferably 5 to 20, mol percent (based on total aromatic monomer units) of carboxylic acid (-COOH) functional groups. The modified triblock copolymer will preferably be hydrogenated such that at least 95% of the initial ethylenic unsaturation is converted (saturated). In the preferred embodiment, the base oil stock used in a SAR 10W40 oil may be a mixture of pariffinic, napthenic and aromatic oils, but the amount of unsaturates (aromatics) will be within the range from 0 to 35 %w based on total oil. In a most preferred embodiment the monoalkenyl aromatic hydrocarbon will be styrene and the conjugated diolefin will be isoprene.

The invention will be further understood from the following illustrative Examples.

## Examples 1 to 4

Four triblock copolymers having different polystyrene block molecular weights and different isoprene polymer block molecular weights were modified to contain from 0.94 to 1.5 %w carboxyl functionality via the lithium metalation technique described in Examples 1 to 14 of EP-A-215,501, discussed above. The resulting functionalised polymers were used in the formulation of an SAE 10W30 lubricating oil composition. The base oil used in the oil compositions was an HVI 100N oil and the oil composition contained 7.75 %w of a standard SF/CC commercially available additive package and 0.5 %w "Acryloid" (trade mark) acrylic ester polymer (ex Rohm & Haas). After preparation, the SAE 10W30 oil composition was tested to determine the amount of carboxyl functionality therein, the cold cranking simulator (CCS) viscosity at -20°C; the engine oil pumpability at -25°C using the TP1 mini-rotary viscometer (MRV) method according to ASTM D4684; and a high temperature, high shear rate (HTHSR) viscosity at 150°C and $1 \times 10^6$ seconds $^{-1}$ using the tapered bearing simulator (TBS) according to ASTM D4683 for the oil composition. For convenience, the results actually obtained are listed in the following Table under the respective headings, carb. funct. %w (based of total wt of polymer therein), Mol % carb. (based on amount of styrene monomer), CCS-20°C, cP ($\times 10^{-3}$Pa.s); TP1/MRV -25°C cP ($\times 10^{-3}$Pa.s); and TBS 150°C cP ($\times 10^{-3}$Pa.s). For comparative purposes the same data was obtained on an SAE 10W30 oil composition containing a commercially available unfunctionalized diblock copolymer having a styrene polymer block with weight average molecular weight 37,000 and in isoprene polymer block having a weight average molecular weight of 61,000. These results too are summarized in the following Table as is the amount of polymer in the oil, (under the heading "Pol., %w") and the weight average molecular weight of all polymer blocks. The weight average molecular weight of all polymer blocks, including both isoprene blocks, is presented under the heading MwX10$^{-3}$, styrene, isoprene. For convenience, the composition containing the functionalized polymers are identified as Compositions Nos. 1-4 in the table and the composition containing the unfunctionalized polymer is identified as Comparative Composition A.

TABLE

| Comp. No. | Pol. %w | Carb. Funct. %w | Mol % carb. | Mw x 10$^{-3}$ Styrene | Isoprene | CCS-20°C cP(x10$^{-3}$Pa.s) | TP1/MRV -25 °C, cP(x10$^{-3}$Pa.s) | TBS 150°C cP(x10$^{-3}$Pa.s) |
|---|---|---|---|---|---|---|---|---|
| 1 | 1.23 | 1.5 | 9.75 | 47 | 47 | 3286 | 18,249 | 2.9 |
| 2 | 0.7 | 0.94 | 19.25 | 23 | 88 | 3118 | 16,527 | 2.7 |
| 3 | 0.81 | 1.1 | 17.05 | 27 | 75 | 3129 | 15,962 | 2.7 |
| 4 | 0.98 | 1.3 | 9.05 | 66 | 64 | 3164 | 16,039 | 2.8 |
| A | 1.08 | 0 | 0 | 37 | 61 | 3274 | 19,300 | 2.7 |

EP 0 458 415 B1

As will be apparent from the data summarized in the foregoing table, the viscosity index improvers of this invention are generally better than the commercially available diblock viscosity improver Comparative Composition A. The significant improvements occur in the high temperature, high shear rate viscosities and in cold temperature properties.

## Claims

**Claims for the following Contracting States : BE, FR, DE, IT, NL, GB**

1.  An oil composition comprising a major amount of an oil and a minor amount of a selectively hydrogenated carboxyl functionalised polymer of general formula B-A-B, wherein each B, prior to hydrogenation, is a conjugated diolefin polymer block and A is a monoalkenyl aromatic hydrocarbon polymer block, said polymer being carboxyl functionalised in the aromatic hydrocarbon polymer block thereof.

2.  A composition according to Claim 1 wherein the functionalised polymer is present in the composition in a concentration in the range 0.01 to 15%w.

3.  A composition according to Claim 2 wherein the concentration is in the range 0.1 to 2%w.

4.  A composition according to any one of Claims 1 to 3 wherein the oil is a lubricating oil.

5.  A composition according to any one of Claims 1 to 4 wherein the carboxyl functionality is present at a concentration in the range from 0.1 to 40 mol% based on the amount of aromatic hydrocarbon monomer in the functionalised polymer.

6.  A composition according to any one of Claims 1 to 5 wherein the carboxyl functionality is present at a concentration in the range from 5 to 20 mol% based on the amount of aromatic hydrocarbon monomer in the functionalised polymer.

7.  A composition according to any one of Claims 1 to 6 wherein the weight average molecular weight (Mw) of each of the conjugated diolefin polymer blocks B is in the range from 20,000 to 150,000, the weight average molecular weight (Mw) of the monoalkenyl aromatic hydrocarbon polymer block A is in the range from 5,000 to 100,000 and the weight ratio of total monoalkenyl aromatic hydrocarbon monomer units to total diolefin monomer units in the functionalised polymer, based on the weight average molecular weights of the respective polymer blocks is in the range from 0.05:1 to 1:1.

8.  A composition according to Claim 7 wherein Mw of each block B is in the range from 45,000 to 90,000, Mw of the block A is in the range 20,000 to 70,000 and the weight ratio of monoalkenyl aromatic hydrocarbon units to diolefin monomer units is in the range from 0.1:1 to 0.6:1.

9.  A composition according to any one of Claims 1 to 8 wherein each B, prior to hydrogenation, is a polyisoprene block and A is a polystyrene block.

**Claims for the following Contracting State : ES**

1.  A process for the preparation of an oil composition which comprises mixing a major amount of an oil and a minor amount of a selectively hydrogenated carboxyl functionalised polymer of general formula B-A-B, wherein each B, prior to hydrogenation, is a conjugated diolefin polymer block and A is a monoalkenyl aromatic hydrocarbon polymer block, said polymer being carboxyl functionalised in the aromatic hydrocarbon polymer block thereof.

2.  A process according to Claim 1 wherein the functionalised polymer is present in the composition in a concentration in the range 0.01 to 15%w.

3.  A process according to Claim 2 wherein the concentration is in the range 0.1 to 2%w.

4.  A process according to any one of Claims 1 to 3 wherein the oil is a lubricating oil.

5.  A process according to any one of Claims 1 to 4 wherein the carboxyl functionality is present at a concentration in the range from 0.1 to 40 mol% based on the amount of aromatic hydrocarbon monomer in the functionalised polymer.

6. A process according to any one of Claims 1 to 5 wherein the carboxyl functionality is present at a concentration in the range from 5 to 20 mol% based on the amount of aromatic hydrocarbon monomer in the functionalised polymer.

7. A process according to any one of Claims 1 to 6 wherein the weight average molecular weight (Mw) of each of the conjugated diolefin polymer blocks B is in the range from 20,000 to 150,000, the weight average molecular weight (Mw) of the monoalkenyl aromatic hydrocarbon polymer block A is in the range from 5,000 to 100,000 and the weight ratio of total monoalkenyl aromatic hydrocarbon monomer units to total diolefin monomer units in the functionalised polymer, based on the weight average molecular weights of the respective polymer blocks is in the range from 0.05:1 to 1:1.

8. A process according to Claim 7 wherein Mw of each block B is in the range from 45,000 to 90,000, Mw of the block A is in the range 20,000 to 70,000 and the weight ratio of monoalkenyl aromatic hydrocarbon units to diolefin monomer units is in the range from 0.1:1 to 0.6:1.

9. A process according to any one of Claims 1 to 8 wherein each B, prior to hydrogenation, is a polyisoprene block and A is a polystyrene block.

## Patentansprüche

### Patentansprüche für folgende Vertragsstaaten : BE, DE, FR, GB, IT, NL

1. Eine Ölzusammensetzung enthaltend eine größere Menge eines Öls und eine geringe Menge eines selektiv hydrierten, carboxyl-funktionalisierten Polymers der allgemeinen Formel B-A-B, in der jedes B - vor der Hydrierung - ein konjugierter Diolefinpolymerblock ist und A ein aromatischer Monoalkenylkohlenwasserstoffpolymerblock ist, in dem besagtes Polymer in dessen aromatischen Kohlenwasserstoffpolymerblock carboxylfunktionalisiert ist.

2. Eine Zusammensetzung nach Anspruch 1, wobei das funktionalisierte Polymer in der Zusammensetzung in einer Konzentration im Bereich von 0,01 bis 15 Gewichtsprozent vorliegt.

3. Eine Zusammensetzung nach Anspruch 2, wobei die Konzentration im Bereich von 0,1 bis 2 Gewichtsprozent liegt.

4. Eine Zusammensetzung nach irgendeinem der Ansprüche 1 bis 3, wobei das Öl ein Schmieröl ist.

5. Eine Zusammensetzung nach irgendeinem der Ansprüche 1 bis 4, wobei die Carboxylfunktionalität bei einer Konzentration im Bereich von 0,1 bis 40 Molprozent vorliegt, bezogen auf die Menge des aromatischen Kohlenwasserstoffmonomers in dem funktionalisierten Polymer.

6. Eine Zusammensetzung nach irgendeinem der Ansprüche 1 bis 5, wobei die Carboxylfunktionalität bei einer Konzentration im Bereich von 5 bis 20 Molprozent vorliegt, bezogen auf die Menge des aromatischen Kohlenwasserstoffmonomers in dem funktionalisierten Polymer.

7. Eine Zusammensetzung nach irgendeinem der Ansprüche 1 bis 6, wobei das durchschnittliche Molekulargewicht(Gewichtsmittel) (Mw) jedes konjugierten Diolefinpolymerblocks B im Bereich von 20 000 bis 150 000 vorliegt und das durchschnittliche Molekulargewicht(Gewichtsmittel) (Mw) des aromatischen Monoalkenylkohlenwasserstoffpolymerblocks A im Bereich von 5000 bis 100 000 liegt und das Gewichtsverhältnis der gesamten aromatischen Monoalkenylkohlenwasserstoffmonomereneinheiten zu den gesamten Diolefinmonomereneinheiten in dem funktionalisierten Polymer, bezogen auf das durchschnittliche Molekulargewicht(Gewichtsmittel) der entsprechenden Polymerblöcke im Bereich von 0,05:1 bis 1:1 liegt.

8. Eine Zusammensetzung nach Anspruch 7, wobei das Mw jedes Blocks B im Bereich von 45 000 bis 90 000 liegt, das Mw des Blocks A im Bereich von 20 000 bis 70 000 liegt und das Gewichtsverhältnis der aromatischen Monoalkenylkohlenwasserstoffeinheiten zu den Diolefinmonomereneinheiten im Bereich von 0,1:1 bis 0,6:1 liegt.

9. Eine Zusammensetzung nach irgendeinem der Ansprüche 1 bis 8, wobei jedes B - vor der Hydrierung - ein Polyisoprenblock und A ein Polystyrolblock ist.

**Patentansprüche für folgenden Vertragsstaat : ES**

1. Ein Verfahren zur Herstellung einer Ölzusammensetzung, umfassend das Mischen einer größeren Menge eines Öls und einer geringen Menge eines selektiv hydrierten, carboxylfunktionalisierten Polymers der allgemeinen Formel B-A-B, in der jedes B - vor der Hydrierung - ein konjugierter Diolefinpolymerblock ist und A ein aromatischer Monoalkenylkohlenwasserstoffpolymerblock ist, in dem besagtes Polymer in dessen aromatischen Kohlenwasserstoffpolymerblock carboxylfunktionalisiert ist.

2. Ein Verfahren nach Anspruch 1, wobei das funktionalisierte Polymer in der Zusammensetzung in einer Konzentration im Bereich von 0,01 bis 15 Gewichtsprozent vorliegt.

3. Ein Verfahren nach Anspruch 2, wobei die Konzentration im Bereich von 0,1 bis 2 Gewichtsprozent liegt.

4. Ein Verfahren nach irgendeinem der Ansprüche 1 bis 3, wobei das Öl ein Schmieröl ist.

5. Ein Verfahren nach irgendeinem der Ansprüche 1 bis 4, wobei die Carboxylfunktionalität bei einer Konzentration im Bereich von 0,1 bis 40 Molprozent vorliegt, bezogen auf die Menge des aromatischen Kohlenwasserstoffmonomers in dem funktionalisierten Polymer.

6. Ein Verfahren nach irgendeinem der Ansprüche 1 bis 5, wobei die Carboxylfunktionalität bei einer Konzentration im Bereich von 5 bis 20 Molprozent vorliegt, bezogen auf die Menge des aromatischen Kohlenwasserstoffmonomers in dem funktionalisierten Polymer.

7. Ein Verfahren nach irgendeinem der Ansprüche 1 bis 6, wobei das durchschnittliche Molekulargewicht (Gewichtsmittel) (Mw) jedes konjugierten Diolefinpolymerblocks B im Bereich von 20 000 bis 150 000 liegt und das durchschnittliche Molekulargewicht (Gewichtsmittel) (Mw) des aromatischen Monoalkenylkohlenwasserstoffpolymerblocks A im Bereich von 5000 bis 100 000 liegt und das Gewichtsverhältnis der gesamten aromatischen Monoalkenylkohlenwasserstoffmonomereneinheiten zu den gesamten Diolefinmonomereneinheiten in dem funktionalisierten Polymer, bezogen auf das durchschnittliche Molekulargewicht (Gewichtsmittel) der entsprechenden Polymerblöcke im Bereich von 0,05:1 bis 1:1 liegt.

8. Ein Verfahren nach Anspruch 7, wobei das Mw jedes Blocks B im Bereich von 45 000 bis 90 000 liegt, das Mw des Blocks A im Bereich von 20 000 bis 70 000 liegt und das Gewichtsverhältnis der aromatischen Monoalkenylkohlenwasserstoffeinheiten zu den Diolefinmonomereneinheiten im Bereich von 0,1:1 bis 0,6:1 liegt.

9. Ein Verfahren nach irgendeinem der Ansprüche 1 bis 8, wobei jedes B - vor der Hydrierung - ein Polyisoprenblock und A ein Polystyrolblock ist.

**Revendications**

**Revendications pour les Etats contractants suivants : BE, DE, FR, GB, IT, NL**

1. Une composition d'huile comprenant une quantité majeure d'une huile et une quantité mineure d'un polymère à fonctionnalité carboxyle sélectivement hydrogéné de formule B-A-B, où chaque B, avant l'hydrogénation, est un bloc de polymère de dioléfine conjuguée et A est un bloc de polymère d'hydrocarbure monoalcényl aromatique, ce polymère étant pourvu d'une fonctionnalité carboxyle dans son bloc de polymère d'hydrocarbure aromatique.

2. Une composition selon la revendication 1, dans laquelle le polymère fonctionnalisé est présent dans une proportion comprise entre 0,01 et 15 % en poids.

3. Une composition selon la revendication 2, dans laquelle ladite proportion est comprise entre 0,1 et 2 % en poids.

4. Une composition selon l'une quelconque des revendications 1 à 3, dans laquelle l'huile est une huile lubrifiante.

5. Une composition selon l'une quelconque des revendications 1 à 4, dans laquelle la fonctionnalité carboxyle est présente à une concentration comprise entre 0,1 et 40 moles % par rapport à la quantité de monomère hydrocarbure aromatique dans le polymère fonctionnalisé.

6. Une composition selon l'une quelconque des revendications 1 à 5, dans laquelle la fonctionnalité carboxyle est présente à une concentration comprise entre 5 et 20 moles pour cent par rapport à la quantité de monomère hydrocarbure aromatique dans le polymère fonctionnalisé.

7. Une composition selon l'une quelconque des revendications 1 à 6, dans laquelle le poids moléculaire moyen en poids (Mw) de chacun des blocs B de polymère de dioléfine conjuguée est compris entre 20 000 et 150 000, le poids moléculaire moyen en poids (Mw) du bloc A de polymère d'hydrocarbure monoalcényl aromatique est compris entre 5 000 et 100 000 et le rapport en poids du total des mailles de monomère hydrocarbure monoalcényl aromatique au total des mailles de monomère dioléfine dans le polymère fonctionnalisé, sur la base des poids moléculaires moyens en poids des blocs de polymères respectifs, est compris entre 0,05:1 et 1:1.

8. Une composition selon la revendication 7, dans laquelle le Mw de chaque bloc B est compris entre 45 000 et 90 000, le Mw du bloc A est compris entre 20 000 et 70 000 et le rapport en poids des mailles d'hydrocarbure monoalcényl aromatique aux mailles de monomère dioléfine est compris entre 0,1:1 et 0,6:1.

9. Une composition selon l'une quelconque des revendications 1 à 8, dans laquelle chaque B, avant l'hydrogénation, est un bloc de polyisoprène et A est un bloc de polystyrène.

**Revendications pour l'Etat contractant suivant : ES**

1. Un procédé pour la préparation d'une composition d'huile, qui consiste à mélanger une quantité prépondérante d'une huile et une quantité plus faible d'un polymère carboxyl- fonctionnalisé, hydrogéné de façon sélective, de formule générale B-A-B, dans laquelle chaque B, avant hydrogénation, est une séquence polymère dioléfinique conjugué et A est une séquence de polymère hydrocarbone aromatique monoalcényle, ce polymère étant carboxyl- fonctionnalisé dans sa séquence polymère hydrocarbone aromatique.

2. Un procédé selon la revendication 1, dans lequel le polymètre fonctionnalisé est présent dans la composition selon une concentration dans la gamme de 0,01 à 15 % en poids.

3. Un procédé selon la revendication 2, dans lequel la concentration est dans la gamme de 0,1 à 2 % en poids.

4. Un procédé selon l'une quelconque des revendications 1 à 3, dans lequel l'huile est une huile lubrifiante.

5. Un procédé selon l'une quelconque des revendications 1 à 4, dans lequel la fonctionnalité carboxyle est présente en une concentration dans la gamme de 0,1 à 40 moles %, en se basant sur la quantité de monomères hydrocarbone aromatique dans le polymère fonctionnalisé.

6. Un procédé selon l'une quelconque des revendications 1 à 5, dans lequel la fonctionnalité carboxyle est présente en une concentration dans la gamme de 5 à 20 moles %, en se basant sur la quantité de monomères hydrocarbone aromatique dans le polymère fonctionnalisé.

7. Un procédé selon l'une quelconque des revendications 1 à 6, dans lequel le poids moléculaire moyen en poids (Mw) de chacune des séquences polymère dioléfinique conjugué B se situe dans la gamme de 20 000 à 150 000, le poids moléculaire moyen en poids (Mw) de la séquence polymère hydrocarbone aromatique A se situe dans la gamme de 5 000 à 100 000 et le rapport pondéral des motifs monomères hydrocarbone aromatique monoalcénylé aux motifs totaux monomères dioléfiniques dans le polymère fonctionnalisé, en se basant sur les poids moléculaires moyens en poids des séquences polymère respectives, se situent dans la gamme 0,05:1 à 1:1.

8. Un procédé selon la revendication 7, dans lequel Mw dans chaque séquence B se situe dans la gamme de 45 000 à 90 000, Mw dans la séquence A se situe dans la gamme de 20 000 à 70 000 et le rapport pondéral des motifs hydrocarbone aromatique monoalcénylé aux motifs monomères dioléfiniques se situent dans la gamme de 0,1:1 à 0,6:1.

9. Un procédé selon l'une quelconque des revendications 1 à 8, dans lequel chaque séquence B, avant hydrogénation, est une séquence polyisoprène et A est une séquence polystyrène.